# FASCICULE DE BREVET EUROPEEN

(11) **EP 3 393 860 B1**
(45) Date de publication et mention de la délivrance du brevet: **07.04.2021**
(21) Numéro de dépôt: 16809499.3
(22) Date de dépôt: 18.11.2016
(51) Int. Cl.: B60R 16/04

(54) **ENSEMBLE POUR L'AGENCEMENT ET LA FIXATION D'ÉLÉMENTS DANS LE COMPARTIMENT MOTEUR D'UN VÉHICULE AUTOMOBILE**
EINHEIT ZUM ANORDNEN UND ZUR BEFESTIGUNG VON EINHEITEN IM MOTORRAUM EINES KRAFTFAHRZEUGS
DEVICE FOR ARRANGING AND FASTENING UNITS IN THE ENGINE COMPARTMENT OF A MOTOR VEHICLE

(30) Priorité: 22.12.2015 FR 1563035
(43) Date de publication de la demande: 31.10.2018
(73) Titulaire: RENAULT s.a.s., 92100 Boulogne-Billancourt (FR)
(72) Inventeur: MAJEWSKI, Paul, 78460 Chevreuse (FR)
(86) Numéro de dépôt international: PCT/FR2016/053004
(87) Numéro de publication internationale: WO 2017/109310

(56) Documents cités:
- WO-A1-2012/158150
- DE-A1-102008 034 628
- DE-A1-102013 216 555
- FR-A1- 2 935 652
- US-A1- 2015 280 187

## Description

### DOMAINE TECHNIQUE DE L'INVENTION

La présente invention concerne un ensemble pour l'agencement et la fixation d'éléments dans le compartiment moteur d'un véhicule automobile.

La présente invention concerne plus particulièrement un ensemble pour la fixation et l'agencement dans le compartiment moteur d'un véhicule automobile d'une batterie d'alimentation en énergie électrique, d'une goulotte de passage de câbles de raccordement électrique, d'un boitier de fusibles et de relais relié électriquement à la batterie via le boitier d'interconnections moteur (BIM) positionné au-dessus du passage de roue, la goulotte comportant sur sa face supérieure un appui en cas d'extraction de la batterie d'orientation longitudinale.

### ÉTAT DE LA TECHNIQUE

Dans le domaine de l'automobile, l'agencement des éléments dans le compartiment moteur d'un véhicule comporte des enjeux de fonctionnement du véhicule, du design, mais aussi de montage et/ou de démontage.

Dans les véhicules automobiles modernes l'agencement du compartiment moteur doit répondre à l'évolution de critères de sécurité passive, surtout celui de la protection au choc d'un piéton vs points durs du compartiment moteur. Cette dernière pousse à passer la batterie, dont les dimensions sont incompressibles, vers le fond du compartiment moteur et de positionner le filtre à air en amont de celle-ci, ceci pour permettre le meilleur compromis visions basse conducteur, sécurité et design.

A l'intérieur du compartiment moteur du véhicule, la batterie sert à démarrer le moteur lors de son démarrage et être alimenté par ce dernier lors de son fonctionnement pour distribuer l'énergie vers des options annexes et protéger l'ensemble du circuit électrique par des boitiers de fusibles et relais, via des câbles d'alimentation électrique.

Ce boitier et les câbles qui lui sont associés sont situés à proximité de la batterie.

Pour répondre à une contrainte d'espace et d'encombrement, de design, réglementation et EuroNcap, dans le compartiment moteur, on recherche un agencement longitudinal compact de la batterie, du câblage habitacle, de la suspension moteur, et du (des) boitier (s) de fusibles et de relais, du passage électrique vers la boucle dynamique moteur, ainsi que du filtre à air en aval de la valise de refroidissement (porte à faux technique).

Cet agencement doit aussi être d'accès aisé lors des opérations de maintenance. Un technicien doit pouvoir démonter la batterie et la retirer du compartiment moteur du véhicule, à bout de bras.

D'après des solutions connues, l'agencement comporte en combinaison, un support de fixation de la batterie, et un boitier de fusibles et relais relié électriquement à la batterie. Le support comporte des éléments de fixation de la batterie, de protection de l'environnement contre des fuites d'électrolyte ainsi que d'éventuelles parois constituant une boite froide. L'agencement est aisé à démonter.

Ces solutions permettent de répondre à la contrainte de compacité de l'agencement en fixant les éléments à proximité l'un de l'autre.

En revanche, il n'est pas prévu le passage des câbles d'alimentation électrique. Les câbles sont disposés autour des éléments de l'agencement.

Lors d'une opération de maintenance, les câbles sont susceptibles de gêner de montage et/ou le démontage de la batterie, voire d'être sectionnés suite au déplacement des éléments de l'agencement.

Suivant une solution, une goulotte de passage de câbles permet de ranger les câbles d'alimentation électrique et de les protéger des éléments du compartiment moteur.

Cette solution permet d'assurer l'intégrité des câbles et de faciliter le montage et/ou le démontage des éléments du moteur du véhicule.

Mais dans une telle solution, la goulotte est indépendante des autres éléments et sa position par rapport à la batterie varie suivant la configuration des éléments du moteur. Cette solution ne répond pas à la contrainte de compacité de l'agencement.

Suivant une autre solution, un bac de support de batterie permet la fixation de la batterie. Le bac comporte une goulotte qui permet le passage de câbles d'alimentation électrique.

Cette solution permet un agencement compact, qui inclut aussi un positionnement de la batterie par rapport au filtre à air du moteur. En revanche, cette solution ne propose pas l'intégration d'un boitier de fusibles et relais.

Le but de l'invention est d'apporter une solution aux différents problèmes que soulève l'agencement des éléments autour d'une batterie d'un véhicule automobile.

Notamment, l'invention propose un agencement qui permet de garder la compacité des trois éléments : batterie d'alimentation en énergie électrique ; goulotte de passage de câbles de raccordement électrique ; et boitier de fusibles et relais relié électriquement à la batterie.

L'invention vise aussi à permettre un démontage et un montage aisé de la batterie lors des opérations de maintenance.

### BREF RESUME DE L'INVENTION

L'invention concerne un ensemble pour la fixation et l'agencement dans le compartiment moteur d'un véhicule automobile, d'une batterie d'alimentation en énergie électrique, d'une goulotte de passage de câbles de raccordement électrique, d'un boitier de fusibles et de relais relié électriquement à la batterie, l'ensemble comportant un support de batterie, par exemple d'orientation horizontale sur une face supérieure duquel est fixée la batterie, caractérisé en ce que la goulotte est fixée sur une face latérale verticale du support de batterie et s'étend selon une direction transversale, le boitier est fixé, de manière démontable, sur une face supérieure de la goulotte dans une position dans laquelle il s'étend verticalement en regard d'une face latérale verticale de la batterie.

Selon d'autres caractéristiques de l'invention,
- en position démontée, le boîtier occupe une position escamotée pour permettre un déplacement de la batterie au-dessus de la goulotte ;
- en position démontée, le boîtier occupe une position escamotée dans laquelle il s'étend horizontalement, et la goulotte est située longitudinalement entre le support et le boîtier ;
- l'ensemble comporte des moyens de positionnement du boîtier sur la goulotte par guidage en coulissement du boîtier sur la goulotte selon une direction longitudinale orthogonale à la face latérale du support ;
- l'ensemble comporte des moyens de verrouillage longitudinal en position montée du boîtier sur la goulotte ;
- les moyens de verrouillage comportent un organe de commande du verrouillage qui s'étend selon la direction verticale et qui comporte une extrémité libre supérieure de commande ;
- la goulotte est apte à supporter, au moins en partie, le poids de la batterie d'alimentation électrique via un couvercle, rabattable à l'usine d'assemblage véhicule par un opérateur, une fois que le câblage a été mis en place ;
- la goulotte comporte au moins un passage pour le passage de câbles vers le boîtier ;
- la face supérieure de la goulotte appartient à un couvercle supérieur de fermeture de la goulotte ;

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue en perspective d'un mode de réalisation de l'ensemble selon les enseignements de l'invention, avec un filtre à air qui définit une contrainte d'espace et d'encombrement de l'ensemble ;
- la figure 2 représente l'ensemble de la figure 1 sans le filtre ;
- la figure 3 est une vue analogue à celle de la figure 2, avec le boitier de fusibles et relais dans une position escamotée.
- la figure 4 est une vue à grande échelle du détail D4 de la figure 3
- la figure 5 est une vue en perspective de l'ensemble de la figure 2, sans la batterie d'alimentation électrique, représenté en coupe suivant le plan A de la figure 2 passant par l'organe de verrouillage de l'ensemble.
- la figure 6 est une vue analogue à celle de la figure 3 illustrant une phase de montage et/ou de démontage de l'ensemble.

### DESCRIPTION DETAILLEE DES FIGURES

Dans la suite de la description, des éléments présentant une structure identique ou des fonctions analogues seront désignés par une même référence.

Dans la suite de la description, on adoptera par convention, à titre non limitatif, des orientations longitudinale, verticale, transversale indiquées par le trièdre L,V,T, des figures.

Dans la suite de la description, les termes « avant » et « arrière » seront compris suivant une orientation longitudinale, par rapport à l'avant du véhicule. Les termes « devant » et « derrière » signifient vers l'avant et vers l'arrière du véhicule.

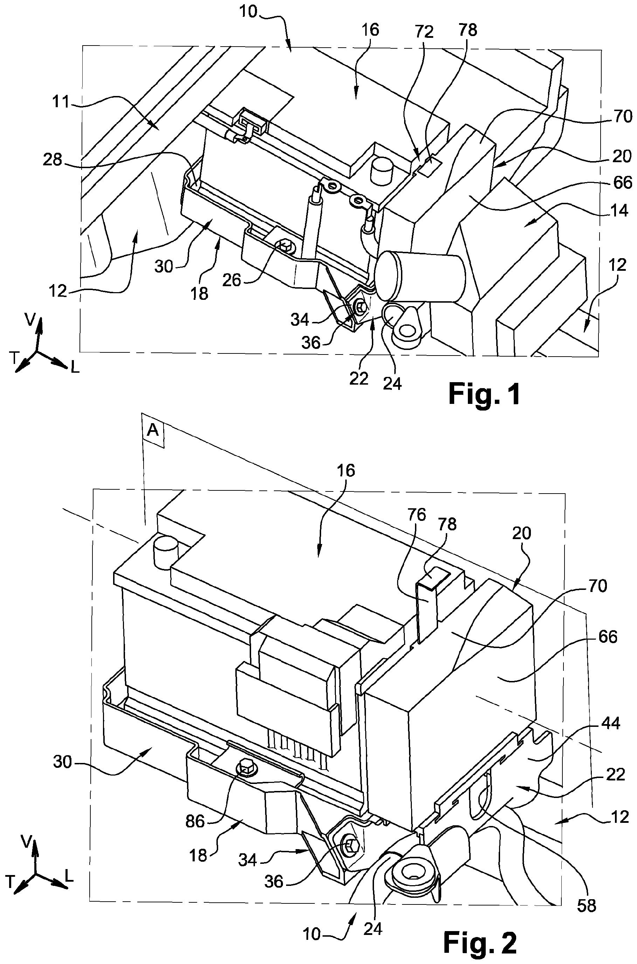

On a représenté aux x figures 1 et 2, un exemple de réalisation, d'un ensemble 10 selon les enseignements de l'invention, dans un compartiment moteur d'un véhicule automobile.

L'ensemble 10 est fixé à la structure 12 du véhicule, dans le compartiment moteur. L'ensemble 10 est fixé en arrière d'un filtre à air 14, partiellement en-dessous d'un autre élément 11 de la structure 12 du véhicule, à l'arrière du compartiment moteur.

L'ensemble 10 comporte une batterie 16 qui est fixée sur un support 18 de batterie, un boitier 20 de fusibles et relais, et une goulotte 22 de passage pour le passage de câbles 24 de raccordement électrique.

La batterie 16 est une batterie classique d'alimentation en énergie électrique pour un véhicule automobile.

La batterie 16 est de forme parallélépipédique rectangle qui s'étend dans une direction longitudinale du véhicule. La batterie 16 repose par sa face inférieure sur le support 18 de batterie.

Le support 18 de batterie est fixé par des moyens de fixation (non représentés) à la structure 12 du véhicule.

Le support 18 en matière plastique rigide comporte une face 28 supérieure plane, horizontale, dite de support. La face 28 de support a une forme complémentaire de celle de la partie inférieure de la batterie 16. La face 28 de support est apte à supporter la batterie 16.

La batterie 16 est fixée à la face 28 de support du support 18 de batterie, par des moyens 26 de blocage, tels qu'un talon contre une contre-forme et bride, moyens utilisés couramment chez Renault au contraire d'une bride sur deux tiges filetées utilisés en alternative chez d'autres constructeurs.

Le support 16 de batterie comporte ici un pourtour 30 latéral de positionnement. Le pourtour 30 latéral de positionnement est un ensemble de joues planes verticales, disposées sur toute la périphérie de la face 28 de support. Les joues du pourtour 30 s'élèvent verticalement vers le haut par rapport à la face 28 de support.

Le pourtour 30 sert de protection contre l'écoulement d'électrolytes de batterie qui peuvent endommager la structure du véhicule par corrosion.

Le pourtour 30 de positionnement comporte une joue qui délimite une face 32 latérale avant, de fixation, sur laquelle la goulotte 22 est fixée par une fixation positive 34.

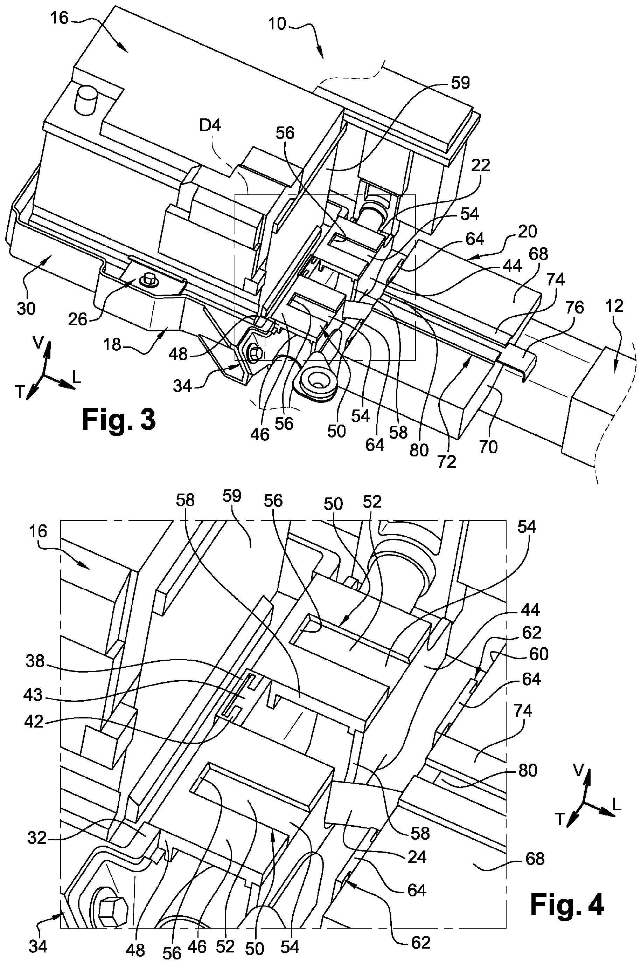

Les moyens 34 de fixation sont ici constitués d'une vis 36 dans un écrou noyé dans le support batterie, et d'une rainure 38 verticale en queue d'aronde. Comme représentée à la figure 4, la rainure 38 est ouverte vers le haut.

La goulotte 22 de passage de câbles est une pièce de section rectangulaire, qui sert de chemin d'interconnexion entre le moteur et le reste du véhicule (approvisionnement en énergie de la batterie, gestion du moteur depuis le calculateur...informations vers interface IHM moteur. Doit donc supporter les contraintes en débattement moteur du départ d'une boucle dynamique de diamètre conséquent (24mm dans notre cas).

La goulotte 22 est une pièce moulée en plastique. Avantageusement, la goulotte 22 est dimensionnée de manière à pouvoir supporter tout ou partie du poids total de la batterie 16 de véhicule automobile.

La goulotte 22 s'étend suivant une direction transversale du véhicule. La longueur de la goulotte 22 est sensiblement égale à la largeur transversale du support 18 de batterie.

La goulotte 22 comporte une face 40 arrière verticale transversale, de fixation, complémentaire de la face 32 avant du bac batterie. La face 40 arrière de fixation est en contact avec la face 32 avant de fixation, et il est prévu des moyens 42 de fixation, complémentaires des moyens 34 de fixation du support 18 de batterie.

Les moyens 42 de fixation comportent, à l'extrémité transversale de la face 40 arrière de la goulotte 22, un trou (non représenté) destiné à loger le boulon des moyens 34 de fixation.

Les moyens 42 de fixation comportent aussi un tenon 43 en queue d'aronde, qui est destiné à être reçu en coulissement dans la rainure des moyens 34 de fixation du support 18 de batterie.

La goulotte 22 comporte une face 44 latérale verticale avant, opposée à la face 40 arrière de la goulotte 22 de passage de câbles.

A sa partie supérieure, la goulotte 22 comporte aussi une face 46 supérieure horizontale, de support. La face 46 supérieure est une face plane qui permet le support du boitier 20 de fusibles et relais.

La face 46 supérieure de la goulotte 22 appartient à un couvercle supérieur de fermeture de la goulotte 22.

La face 46 supérieure comporte des moyens 48 d'emboitement et des charnières (non représentées).

Les moyens 48 d'emboitement s'emboitent à la fois sur la face 40 arrière de la goulotte 22, et sur la face 32 avant de fixation du support 18 de batterie. Les charnières lient en pivotement, la face 46 supérieure et la face 44 latérale avant de la goulotte 22.

La face 46 supérieure de la goulotte 22 est présentée ouverte lors de sa mise en place à l'usine d'assemblage pour l'installation de câbles 24 dans la goulotte 22.

A la figure 4, le boitier 20 de fusibles et relais n'est pas représenté sur la face 46 supérieure de la goulotte 22.

La face 46 supérieure de la goulotte comporte des moyens 50 de positionnement par guidage en coulissement du boitier 20 sur la goulotte 22 de passage de câbles.

Les moyens 50 de positionnement comportent deux rainures 52 rectilignes, longitudinales, en forme de queue d'aronde. Ces rainures 52 comportent une extrémité 54 avant ouverte, et une extrémité arrière, opposée délimitée par une butée 56.

La face 44 supérieure comporte aussi un passage 58 vertical pour le passage de câbles 24 entre l'intérieur de la goulotte 22 et le boitier 20 de fusibles et relais.

Le passage 58 est situé entre les moyens 50 de positionnement du boitier 20 de fusibles et relais.

Le passage 58 se prolonge dans la face 44 avant de la goulotte 22.

Le boitier 20 de fusibles et relais est un boitier en matière plastique, de forme parallélépipédique.

Le boitier 20 est apte à occuper deux positions : une position montée dans laquelle le boitier 20 est positionné verticalement sur la goulotte 22 de passage de câbles, en regard d'une face 59 latérale verticale de la batterie 16 ; et une position escamotée horizontale pour permettre un déplacement de la batterie 16 au-dessus de la goulotte 22.

A la figure 2 on a représenté le boitier 20 en position montée.

En position montée, la largeur du boitier 20, suivant la direction longitudinale, est sensiblement égale à la largeur, suivant la direction longitudinale, de la face supérieure 46 de la goulotte 22. De même, la longueur du boitier 20 suivant la direction transversale, est sensiblement égale à la longueur, suivant la direction transversale de la face supérieure 46 de la goulotte 22.

La hauteur du boitier 20, est dimensionnée de manière à ne pas dépasser la face supérieure de la batterie 16.

Ainsi, l'ensemble 10 monté, est compact et de forme générale parallélépipédique.

Le boitier 20 comporte une face 60 inférieure plane, apte à être fixée sur la face 46 supérieure de la goulotte 22. La face 60 inférieure du boitier 20 comporte des moyens 62 de positionnement complémentaires des moyens 50 de positionnement de la face 46 supérieure de la goulotte 22.

Les moyens 62 de positionnement comportent des tenons 64 en queue d'aronde destinés à être reçu en coulissement dans les rainures 52 des moyens 50 de positionnement de la goulotte 22. De cette manière, le boitier 20 est apte à être positionné sur la face 46 supérieure de la goulotte 22 par guidage en coulissement du boitier 20 sur la goulotte 22 entre l'extrémité 54 avant ouverte et la butée 56.

Le boitier 20 comporte une face 66 verticale avant, qui s'étend dans la direction transversale. Le boitier 20 comporte aussi une face 68 arrière verticale, et une face 70 horizontale.

La face 68 arrière du boitier 22 comporte des moyens 72 de verrouillage longitudinal en position montée du boitier 20 sur la goulotte 22. Les moyens 72 de verrouillage comportent un logement 74 vertical qui s'étend sur toute la hauteur de la face 68.

Le logement 74 est positionné en vis-à-vis de la rainure 38 du support 18 de batterie.

Les moyens 72 de verrouillage comportent aussi un organe 76 de commande du verrouillage, qui s'étend selon la direction verticale. L'organe 76 de commande comporte une extrémité 78 libre supérieure de commande, et une extrémité 80 inférieure de verrouillage.

L'organe 76 de verrouillage est une tige plate, de section complémentaire de la section du logement 74 vertical du boitier 20. L'extrémité 78 libre supérieure de commande de l'organe 76 est pliée en angle droit. De cette manière, lorsque l'organe de verrouillage est en place, l'extrémité 78 libre est posée sur la face 70 supérieure du boitier 20.

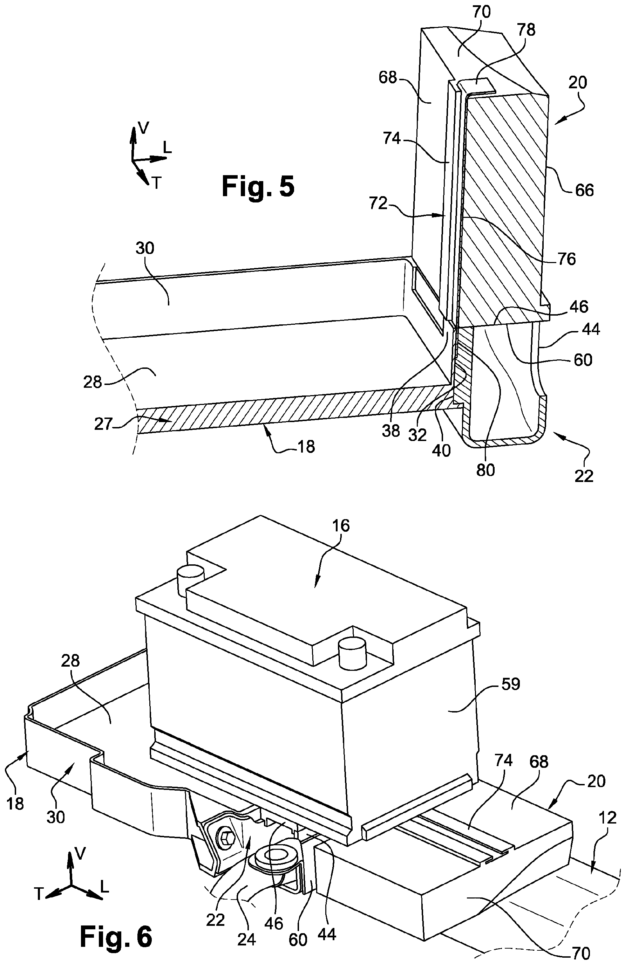

A la figure 5 on a représenté l'organe 76 de verrouillage, en position de verrouillage. Dans la position de verrouillage, l'organe 76 traverse le logement 74, et son extrémité 80 de verrouillage est reçue dans la rainure 38 de support du support 18 de batterie. De cette manière, l'organe 76 de verrouillage interdit le déplacement du boitier 20, dans la direction longitudinale.

Avantageusement, l'organe 76 fait pression, en direction horizontale longitudinale, sur le tenon 43 des moyens 42 complémentaires de fixation de la goulotte 22, pour renforcer la fixation entre la goulotte 22 et la face 28 de support du support 18 de batterie 16.

Avantageusement, l'organe 76 de verrouillage comporte un moyen de blocage (non représenté) de l'extrémité 78 libre de commande, en position insérée, de verrouillage.

Le démontage de la batterie 16 dans un ensemble 10 selon les enseignements de l'invention va être décrit dans la suite, en référence aux figures 1 à 6.

La batterie 16 n'est accessible que par sa zone avant. L'arrière de la batterie 16 est recouvert par la structure 12 du véhicule.

La première étape de démontage de la batterie 16, consiste à retirer le filtre à air 14, qui se trouve devant l'ensemble 10 dans le compartiment moteur du véhicule. Le retrait du filtre 14 à air dégage un espace devant la goulotte 22 comme représenté à la figure 2.

L'extrémité 78 libre de l'organe 76 de verrouillage est saisie à la main puis tirée verticalement vers le haut, de manière à dégager son extrémité 80 de verrouillage de la rainure 38 de support du support 18 de batterie.

Le boitier 20 de fusibles et relais est alors extrait longitudinalement vers l'avant en le faisant glisser dans les rainures 52 de la goulotte 22.

Une fois le boitier 20 extrait, il est pivoté autour d'un axe transversal de manière à le placer devant la goulotte 22, la face 60 inférieure du boitier parallèle, et en regard de la face 44 latérale avant de la goulotte 22.

Le boitier 20 est alors en position escamotée horizontalement, et la goulotte 22 est située longitudinalement entre le support 18 et le boitier 20.

Lors de cette opération, les câbles 24 sortants de la goulotte 22 vers le boitier 20 par le passage 58 de la goulotte 22 restent connectés au boitier 20. Les câbles 24 suivent l'ouverture du passage 58 à travers la face 44 latérale avant de la goulotte 22.

L'espace libéré par le filtre 14 à air est occupé par le boitier 20 en position escamotée devant la goulotte 22.

La bride 26 de blocage de la batterie 16 sur le support 18 peut alors être retiré.

La batterie 16 est à la fois tirée vers l'avant du véhicule et soulevée de manière à ce qu'elle repose sur la goulotte 22 de passage de câbles, comme représenté à la figure 6.

Avantageusement, le niveau vertical atteint par le boitier 20 dans la position escamotée est verticalement en dessous du plan de la face 46 supérieure de la goulotte. De cette manière, la batterie 16 repose sur la goulotte 22 sans endommager le boitier 20.

Avantageusement, la batterie 16 est apte à rester en appui sur la goulotte 22 dans une position stable.

Une fois la batterie 16 positionnée sur la goulotte 22, il est aisé de saisir la batterie 16 qui se situe dans une zone dégagée. De plus la batterie 16 est surélevée sur la goulotte 22 par rapport à sa position montée, ce qui permet de réduire l'effort pour la personne qui, à bout de bras, retire la batterie 16 hors du compartiment moteur du véhicule.

## Revendications

1. Ensemble (10) pour la fixation et l'agencement dans le compartiment moteur d'un véhicule automobile, comportant :
- une batterie (16) d'alimentation en énergie électrique ;
- un support (18) de batterie d'orientation horizontale sur une face (28) supérieure duquel est fixée la batterie (16),
**caractérisé en ce qu'il comporte :**
- une goulotte (22) de passage de câbles (24) de raccordement électrique, fixée sur une face (32) latérale verticale du support (18) de batterie et qui s'étend selon une direction transversale ;
- un boitier (20) de fusibles et de relais relié électriquement à la batterie (16), fixé de manière démontable sur une face (46) supérieure de la goulotte (22) dans une position dans laquelle il s'étend verticalement en regard d'une face (59) latérale verticale de la batterie (16).

2. Ensemble (10) suivant la revendication 1, **caractérisé en ce que**, en position démontée, le boîtier (20) occupe une position escamotée pour permettre un déplacement de la batterie (16) au-dessus de la goulotte (22).

3. Ensemble (10) suivant la revendication 2, **caractérisé en ce que**, en position démontée, le boîtier (20) occupe une position escamotée dans laquelle il s'étend horizontalement, et **en ce que** la goulotte (22) est située longitudinalement entre le support (18) et le boîtier (20).

4. Ensemble (10) suivant la revendication 1, **caractérisé en ce qu'**il comporte des moyens (50, 62) de positionnement du boîtier (20) sur la goulotte (22) par guidage en coulissement du boîtier (20) sur la goulotte (22) selon une direction longitudinale orthogonale à ladite face (32) latérale du support (18).

5. Ensemble (10) suivant la revendication 4 **caractérisé en ce qu'**il comporte des moyens (72) de verrouillage longitudinal en position montée du boîtier (20) sur la goulotte (22).

6. Ensemble (10) suivant la revendication 4, **caractérisé en ce que** les moyens (72) de verrouillage comportent un organe (76) de commande du verrouillage qui s'étend selon la direction verticale et qui comporte une extrémité (78) libre supérieure de commande.

7. Ensemble (10) suivant l'une quelconque des revendications 1 à 6, **caractérisé en ce que** la goulotte (22) est apte à supporter, au moins en partie, le poids de la batterie (16) d'alimentation électrique.

8. Ensemble (10) suivant l'une quelconque des revendications 1 à 7, **caractérisé en ce que** la goulotte (22) comporte au moins un passage (58) pour le passage de câbles (24) vers le boîtier (22).

9. Ensemble (10) suivant l'une quelconque des revendications 1 à 8, **caractérisé en ce que** la face (46) supérieure de la goulotte (22) appartient à un couvercle supérieur de fermeture de la goulotte (22).

## Patentansprüche

1. Einheit (10) zur Befestigung und zum Anordnen im Motorraum eines Kraftfahrzeugs, umfassend:
- eine Batterie (16) zur Versorgung mit elektrischer Energie;
- einen Batterieträger (18) mit horizontaler Ausrichtung, wobei auf einer Oberseite (28) desselben die Batterie (16) befestigt ist,
**dadurch gekennzeichnet, dass** sie umfasst:
- einen Installationskanal (22) zur Durchführung von elektrischen Anschlusskabeln (24), der an einer vertikalen Seitenfläche (32) des Batterieträgers (18) befestigt ist und der sich in einer Querrichtung erstreckt;
- einen mit der Batterie (16) elektrisch verbundenen Sicherungs- und Relaiskasten (20), der demontierbar auf einer Oberseite (46) des Installationskanals (22) in einer Position befestigt ist, in welcher er sich vertikal gegenüber einer vertikalen Seitenfläche (59) der Batterie (16) erstreckt.

2. Einheit (10) nach Anspruch 1, **dadurch gekennzeichnet, dass** der Kasten (20) in der demontierten Position eine zurückgezogene Position einnimmt, um eine Verschiebung der Batterie (16) oberhalb des Installationskanals (22) zu ermöglichen.

3. Einheit (10) nach Anspruch 2, **dadurch gekennzeichnet, dass** der Kasten (20) in der demontierten Position eine zurückgezogene Position einnimmt, in welcher er sich horizontal erstreckt, und dadurch, dass sich der Installationskanal (22) längs zwischen dem Träger (18) und dem Kasten (20) befindet.

4. Einheit (10) nach Anspruch 1, **dadurch gekennzeichnet, dass** sie Mittel (50, 62) zur Positionierung des Kastens (20) auf dem Installationskanal (22) durch Gleitführung des Kastens (20) auf dem Installationskanal (22) in einer Längsrichtung, die zur Seitenfläche (32) des Trägers (18) orthogonal ist, umfasst.

5. Einheit (10) nach Anspruch 4, **dadurch gekennzeichnet, dass** sie Mittel (72) zur Längsverriegelung des Kastens (20) in der montierten Position auf dem Installationskanal (22) umfasst.

6. Einheit (10) nach Anspruch 4, **dadurch gekennzeichnet, dass** die Verriegelungsmittel (72) ein Organ (76) zur Steuerung der Verriegelung umfassen, welches sich in der vertikalen Richtung erstreckt und welches ein freies oberes Ende (78) zur Steuerung umfasst.

7. Einheit (10) nach einem der Ansprüche 1 bis 6, **dadurch gekennzeichnet, dass** der Installationskanal (22) geeignet ist, wenigstens teilweise das Gewicht der Batterie (16) zur Stromversorgung zu tragen.

8. Einheit (10) nach einem der Ansprüche 1 bis 7, **dadurch gekennzeichnet, dass** der Installationskanal (22) wenigstens einen Durchlass (58) für die Durchführung von Kabeln (24) zum Kasten (22) umfasst.

9. Einheit (10) nach einem der Ansprüche 1 bis 8, **dadurch gekennzeichnet, dass** die Oberseite (46) des Installationskanals (22) zu einer oberen Abdeckung zum Verschluss des Installationskanals (22) gehört.

## Claims

1. Assembly (10) for fastening and arranging in the engine compartment of a motor vehicle, comprising:
- an electrical energy power supply battery (16),
- a horizontal battery support (18) having an upper face (28) on which the battery (16) is fastened,
**characterized in that it comprises:**
- a raceway (22) for electrical connection cables (24), fastened on a vertical side face (32) of the battery support (18) and which extends in a transverse direction;
- a fuse-and-relay box (20) connected electrically to the battery (16), fastened removably on an upper face (46) of the raceway (22) in a position in which same extends vertically facing a vertical side face (59) of the battery (16).

2. Assembly (10) according to Claim 1, **characterized in that**, in a disassembled position, the box (20) occupies a retracted position to enable movement of the battery (16) above the raceway (22).

3. Assembly (10) according to Claim 2, **characterized in that**, in a disassembled position, the box (20) occupies a retracted position in which same extends horizontally, and **in that** the raceway (22) is positioned longitudinally between the support (18) and the box (20).

4. Assembly (10) according to Claim 1, **characterized in that** it includes means (50, 62) for positioning the box (20) on the raceway (22) by guiding the box (20) in a sliding manner on the raceway (22) in a longitudinal direction orthogonal to said side face (32) of the support (18).

5. Assembly (10) according to Claim 4, **characterized in that** it includes means (72) for longitudinally locking the box (20) on the raceway (22) in the assembled position.

6. Assembly (10) according to Claim 4, **characterized in that** the locking means (72) include a locking control member (76) that extends vertically and that has a free upper control end (78).

7. Assembly (10) according to any one of Claims 1 to 6, **characterized in that** the raceway (22) is designed to at least partially support the weight of the electrical power supply battery (16).

8. Assembly (10) according to any one of Claims 1 to 7, **characterized in that** the raceway (22) has at least one passage (58) leading the cables (24) to the box (22).

9. Assembly (10) according to any one of Claims 1 to 8, **characterized in that** the upper face (46) of the raceway (22) is part of an upper closing cover of the raceway (22).
